# EUROPEAN PATENT APPLICATION

(11) **EP 4 748 577 A1**
(43) Date of publication of application: **27.05.2026**
(21) Application number: 25208257.3
(22) Date of filing: 13.10.2025
(51) Int. Cl.: B41J 2/175

(54) **STORAGE BAG**

(30) Priority: 22.11.2024 JP 2024203685
(71) Applicant: BROTHER KOGYO KABUSHIKI KAISHA, Aichi-ken 467-8561 (JP)
(72) Inventor: SHINODA, Noriko, Nagoya, 467-8562 (JP); TAHARA, Tomoyo, Nagoya, 467-8562 (JP)
(74) Representative: Kuhnen & Wacker Patent- und Rechtsanwaltsbüro PartG mbB

(57) **Abstract**

A storage bag includes a bag configured to store an ink cartridge configured to be attached to and detached from an inkjet printer, a sealing member configured to seal an opening that is open, and an ink leakage prevention member located at a bottom of an internal space of the bag. The ink cartridge includes an ink outflow port opening in a mounting direction in which the ink cartridge is mounted to the inkjet printer, and a valve configured to open and close the ink outflow port, the ink outflow port is located at a lower end portion of the ink cartridge in an up-down direction in a state where the ink cartridge is in a mounting posture in which the ink cartridge mounted to the inkjet printer.

## Description

### BACKGROUND ART

A related art discloses a consumable container including a container case and a cartridge lid. The container case can store an ink cartridge. The cartridge lid can be mounted to the container case and seals an ink supply port of the ink cartridge. In the case of the consumable container disclosed in the related art, the ink cartridge is stored in the container case, and then the cartridge lid is mounted to the container case. Accordingly, an ink is prevented from leaking through the ink supply port. The ink cartridge stored in the container case is returned to a recycler for recycling.

In the case of the consumable container disclosed in the related art, it is necessary to mount the cartridge lid to the container case after the used ink cartridge is stored in the container case. Therefore, an operation of returning the ink cartridge is troublesome. In addition, a user may forget to mount the cartridge lid to the container case. In this case, the ink easily leaks through the ink supply port during transportation of the ink cartridge, and a surface of the ink cartridge is easily contaminated with the ink. In addition, the ink cartridge may move in the container case due to vibration during the transportation of the ink cartridge, and the ink cartridge may be damaged.

An object of the present disclosure is to provide a storage bag in which ink leakage through an ink supply port can be prevented simply by placing an ink cartridge into a bag, and the ink cartridge is less likely to be damaged.

### SUMMARY

A storage bag including:
a bag configured to store an ink cartridge configured to be attached to and detached from an inkjet printer;
a sealing member configured to seal an opening that is open; and
an ink leakage prevention member located at a bottom of an internal space of the bag,
in which the ink cartridge includes:
   an ink outflow port opening in a mounting direction in which the ink cartridge is mounted to the inkjet printer; and
   a valve configured to open and close the ink outflow port,
the ink outflow port is located at a lower end portion of the ink cartridge in an up-down direction in a state where the ink cartridge is in a mounting posture in which the ink cartridge mounted to the inkjet printer, the ink outflow port being located away from a first end of the ink cartridge in the mounting direction to a removal direction opposite to the mounting direction,
an inner surface of the bag has a shape conforming to an appearance shape of the ink cartridge inserted into the internal space of the bag in the mounting direction, and
the ink leakage prevention member has a closing surface that closes the ink outflow port in a state where the ink cartridge is inserted into the internal space of the bag in the mounting direction.

### BRIEF DESCRIPTION OF DRAWINGS

FIG. 1 is a schematic diagram showing a state where a new ink cartridge 2 is stored in a storage bag 1 before opening.
FIG. 2 is a perspective view showing a mounting posture in which the ink cartridge 2 is mounted in an inkjet printer 11.
FIG. 3 is a cross-sectional view of the ink cartridge 2 taken along a plane perpendicular to a left-right direction.
FIG. 4 is a schematic diagram showing the storage bag 1.
FIG. 5 is a schematic diagram showing the storage bag 1 that is open.
FIG. 6 is a schematic diagram showing that the ink cartridge 2 cannot be inserted into an internal space 14A of an inner bag 14 in an up-down direction through an opening.
FIG. 7 is a schematic diagram showing that the ink cartridge 2 can be inserted into the internal space 14A of the inner bag 14 in a front-rear direction through the opening.
FIG. 8 is a schematic diagram showing a state where the ink cartridge 2 is inserted forward into the internal space 14A of the inner bag 14 through the opening.
FIG. 9 is a schematic diagram showing a state where the ink cartridge 2 is erroneously inserted rearward into the internal space 14A of the inner bag 14 through the opening.
FIG. 10 is a schematic diagram showing a state where the opening in FIG. 8 is sealed by a sealing member.
FIG. 11 is a schematic diagram showing the storage bag 1 according to a modification.
FIG. 12 is a schematic diagram showing the storage bag 1 according to a modification.
FIG. 13 is a schematic diagram showing the storage bag 1 according to a modification.
FIG. 14 is a partial schematic diagram showing the storage bag 1 according to a modification.
FIG. 15 is a schematic diagram showing the storage bag 1 according to a modification.

### DESCRIPTION

Hereinafter, a storage bag 1 according to an embodiment of the present invention will be described in detail. The following embodiment is merely an example of the present invention, and it is needless to say that the embodiment can be appropriately modified without departing from the gist of the present invention.

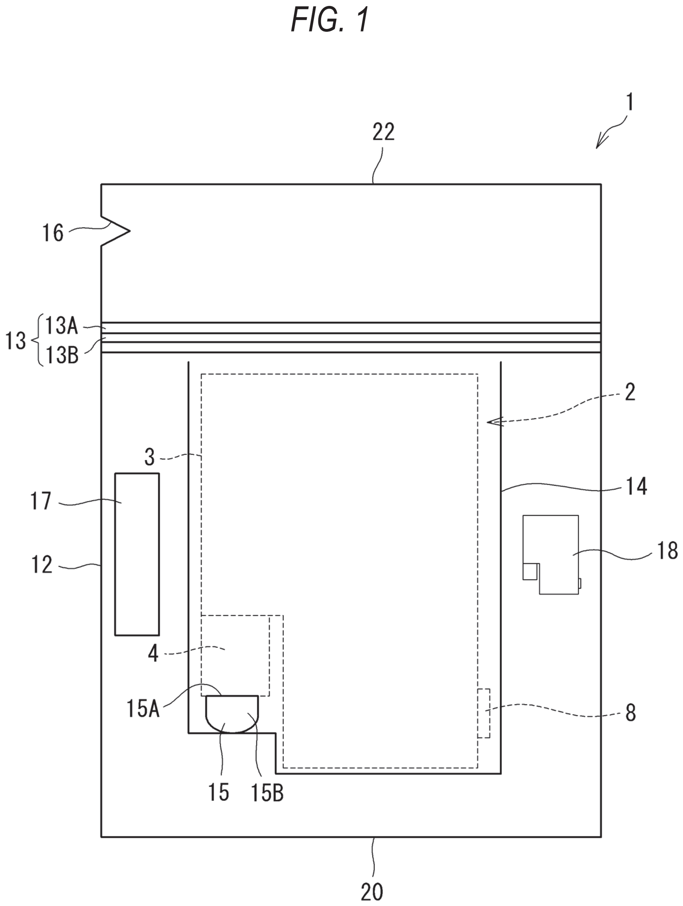

As shown in FIG. 1, the storage bag 1 is used as a bag configured to store an ink cartridge 2 before use. In other words, the storage bag 1 is used as a bag for transporting a new ink cartridge 2. On the other hand, the storage bag 1 is used as a bag for mailing the used ink cartridge 2 after opening.

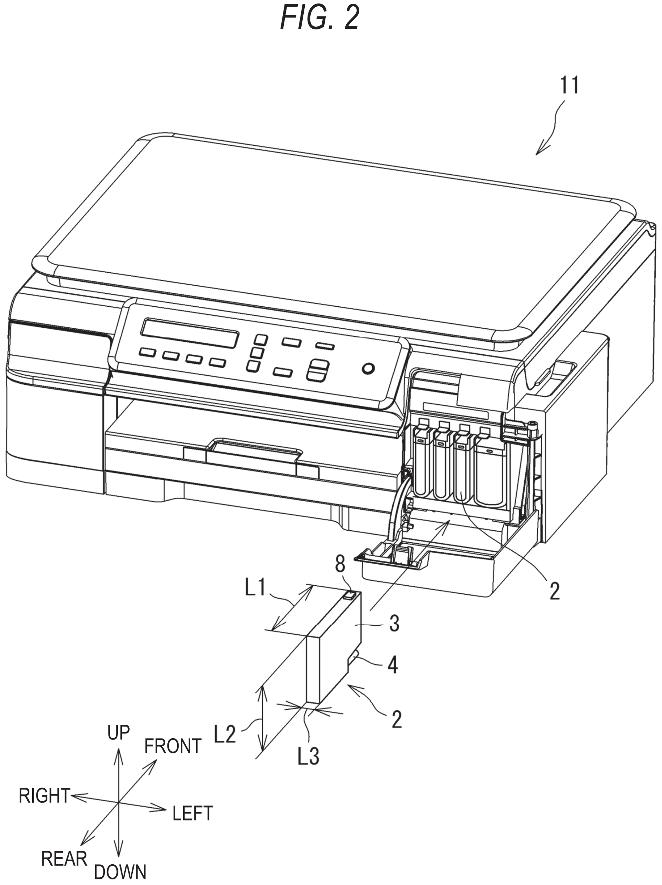

As shown in FIG. 2, the ink cartridge 2 is configured to be attached to and detached from an inkjet printer 11. Hereinafter, a direction in which the ink cartridge 2 is mounted to the inkjet printer 11 is referred to as a front direction. A direction in which the ink cartridge 2 is detached from the inkjet printer 11 is referred to as a rear direction. The front direction and the rear direction are collectively referred to as a front-rear direction. An up-down direction of the ink cartridge 2 is defined in a mounting posture in which the ink cartridge 2 is mounted in the inkjet printer 11. A left-right direction is defined when the ink cartridge 2 in the mounting posture is viewed from the front direction. The front direction is an example of a mounting direction. The rear direction is an example of a removal direction.

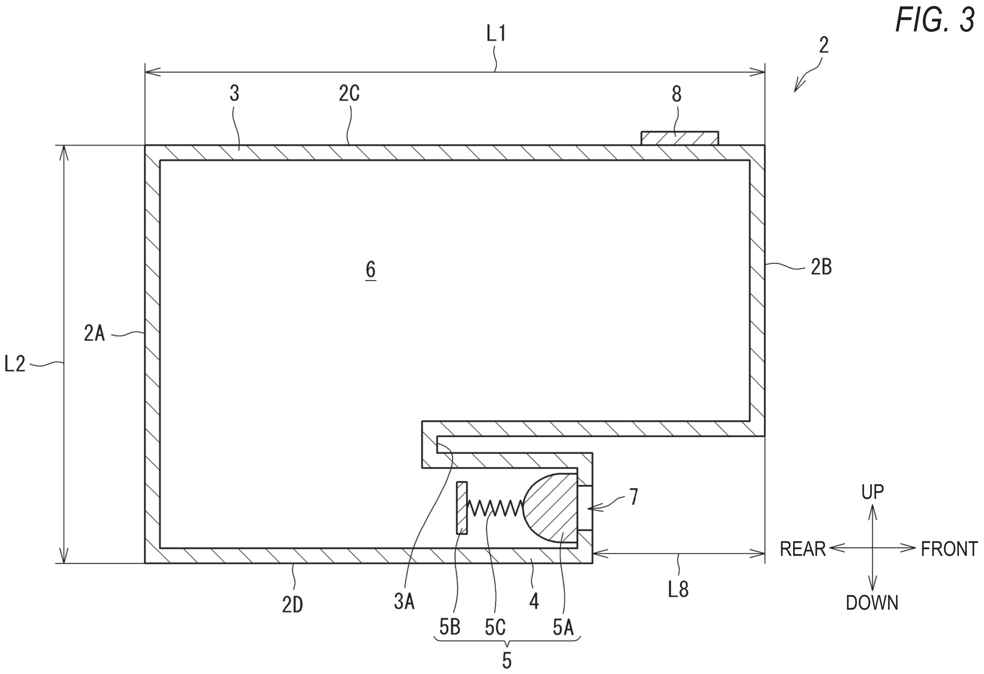

As shown in FIGs. 2 and 3, the ink cartridge 2 includes a housing 3, an ink outflow portion 4, and a valve 5. The housing 3 has a box shape. A lower end portion of the housing 3 has a recess portion 3A recessed rearward from a front end 2B of the housing 3. A length L1 in the front-rear direction between the front end 2B and a trailing end 2A of the housing 3 is longer than a length L2 in the up-down direction between an upper end 2C and a lower end 2D of the housing 3. The length L2 of the housing 3 in the up-down direction is longer than a length L3 of the housing 3 in the left-right direction. The housing 3 has an ink storage chamber 6 for storing an ink.

The ink outflow portion 4 is located at the lower end portion of the housing 3. In the present embodiment, the ink outflow portion 4 is located in the recess portion 3A. The ink outflow portion 4 may be located on a lower end surface of the housing 3. A lower end of the ink outflow portion 4 coincides with the lower end 2D of the housing 3 in the up-down direction. The ink outflow portion 4 has a cylindrical shape defining an ink outflow port 7.

The ink outflow port 7 opens frontward. The ink outflow port 7 is located rearward away from the front end 2B of the housing 3. The ink outflow port 7 communicates with the ink storage chamber 6. The ink outflow port 7 has a circular shape. The ink in the ink storage chamber 6 flows out through the ink outflow port 7. A storage element 8 is located at the upper end 2C of the housing 3. The storage element 8 stores cartridge information.

The valve 5 is located in an internal space of the ink outflow portion 4. The valve 5 is configured to open and close the ink outflow port 7. Specifically, the valve 5 includes a valve body 5A, a valve seat 5B, and a biasing member 5C. The valve body 5A is configured to move in the front-rear direction between a closed position and an open position. The valve body 5A at the closed position closes the ink outflow port 7. The valve body 5A at the open position opens the ink outflow port 7. The valve seat 5B is fixed to an inner surface of the ink outflow portion 4 behind the valve body 5A.

The biasing member 5C is a coil spring configured to be compressed in the front-rear direction. One end of the biasing member 5C is supported by the valve seat 5B. The other end of the biasing member 5C is supported by the valve body 5A. The biasing member 5C biases the valve body 5A to the closed position. Accordingly, in a case where the valve body 5A is pressed rearward from the front direction, the valve body 5A moves from the closed position to the open position against a biasing force of the biasing member 5C.

The ink stored in the ink storage chamber 6 contains one or more of a colorant, water, a water-soluble organic solvent, and a water-insoluble organic solvent. The ink may be an aqueous ink containing a colorant, water, and a water-soluble organic solvent, or may be an oil-based ink containing a colorant and a water-insoluble organic solvent. The ink may be a pigment ink or a dye ink. The water-insoluble organic solvent is not particularly limited as long as it is water-insoluble.

The colorant contains one or more of a pigment and a dye. Examples of the pigment include carbon black, an inorganic pigment, and an organic pigment. Examples of the carbon black include furnace black, lamp black, acetylene black, and channel black. Examples of the inorganic pigment include titanium oxide, an iron oxide-based inorganic pigment, and a carbon black-based inorganic pigment. Examples of the organic pigment include: azo pigments such as azo lake, an insoluble azo pigment, a condensed azo pigment, and a chelate azo pigment; polycyclic pigments such as a phthalocyanine pigment, a perylene and perinone pigment, an anthraquinone pigment, a quinacridone pigment, a dioxazine pigment, a thioindigo pigment, an isoindolinone pigment, and a quinophthalone pigment; dye lake pigments such as a basic dye lake pigment and an acid dye lake pigment; nitro pigments; nitroso pigments; and aniline black daylight fluorescent pigments. As the pigment, for example, a resin dispersion type pigment which can be dispersed in water by a pigment dispersion resin is suitably used.

As the pigment, a self-dispersion type pigment may be used. The self-dispersion type pigment can be dispersed in water without using a dispersant. The self-dispersion type pigment is obtained by, for example, introducing at least one of a hydrophilic functional group such as a carbonyl group, a hydroxy group, a carboxylic acid group, a sulfonic acid group, and a phosphoric acid group, and a salt thereof into pigment particles by chemical bonding, either directly or through other groups.

As the self-dispersion type pigment, a pigment treated by a method described in the following publications can be used. The publications are, for example, JPH08-3498A, JP2000-513396A, JP2008-524400A, and JP2009-515007A. As a raw material of the self-dispersion type pigment, either an inorganic pigment or an organic pigment can be used.

The dye is, for example, a direct dye, an acid dye, a basic dye, or a reactive dye. One or more of the pigment and the dye may be contained in the aqueous ink. Specific examples of the dye include C.I. Direct Black, C.I. Direct Blue, C.I. Direct Red, C.I. Direct Yellow, C.I. Direct Orange, C.I. Direct Violet, C.I. Direct Brown, C.I. Direct Green, C.I. Acid Black, C.I. Acid Blue, C.I. Acid Red, C.I. Acid Yellow, C.I. Acid Orange, C.I. Acid Violet, C.I. Basic Black, C.I. Basic Blue, C.I. Basic Red, C.I. Basic Violet, and C.I. Food Black.

Examples of the C.I. Direct Black include C.I. Direct Black 17, 19, 32, 51, 71, 108, 146, 154, and 168. Examples of the C.I. Direct Blue include C.I. Direct Blue 6, 22, 25, 71, 86, 90, 106, and 199. Examples of the C.I. Direct Red include C.I. Direct Red 1, 4, 17, 28, 83, and 227. Examples of the C.I. Direct Yellow include C.I. Direct Yellow 12, 24, 26, 86, 98, 132, 142, and 173. Examples of the C.I. Direct Orange include C.I. Direct Orange 34, 39, 44, 46, and 60. Examples of the C.I. Direct Violet include C.I. Direct Violet 47 and 48. Examples of the C.I. Direct Brown include C.I. Direct Brown 109. Examples of the C.I. Direct Green include C.I. Direct Green 59. Examples of the C.I. Acid Black include C.I. Acid Black 2, 7, 24, 26, 31, 52, 63, 112, and 118. Examples of the C.I. Acid Blue include C.I. Acid Blue 9, 22, 40, 59, 90, 93, 102, 104, 117, 120, 167, 229, and 234. Examples of the C.I. Acid Red include C.I. Acid Red 1, 6, 32, 37, 51, 52, 80, 85, 87, 92, 94, 115, 180, 256, 289, 315, and 317. Examples of the C.I. Acid Yellow include C.I. Acid Yellow 11, 17, 23, 25, 29, 42, 61, and 71. Examples of the C.I. Acid Orange include C.I. Acid Orange 7 and 19. Examples of the C.I. Acid Violet include C.I. Acid Violet 49. Examples of the C.I. Basic Black include C.I. Basic Black 2. Examples of the C.I. Basic Blue include C.I. Basic Blue 1, 3, 5, 7, 9, 24, 25, 26, 28, and 29. Examples of the C.I. Basic Red include C.I. Basic Red 1, 2, 9, 12, 13, 14, and 37. Examples of the C.I. Basic Violet include C.I. Basic Violet 7, 14, and 27. Examples of the C.I. Food Black include C.I. Food Black 1 and 2.

The water-soluble organic solvent is, for example, a wetting agent that prevents the aqueous ink from drying at a nozzle leading end portion of an inkjet head and a penetrating agent that adjusts a drying rate on a recording medium.

The wetting agent is not particularly limited, and examples thereof include: lower alcohols such as methyl alcohol, ethyl alcohol, n-propyl alcohol, isopropyl alcohol, n-butyl alcohol, sec-butyl alcohol, and tert-butyl alcohol; amides such as dimethylformamide and dimethylacetamide; ketones such as acetone; keto alcohols such as diacetone alcohol; ethers such as tetrahydrofuran and dioxane; polyhydric alcohols such as a polyalkylene glycol, an alkylene glycol, glycerin, and trimethylolpropane; 2-pyrrolidone; N-methyl-2-pyrrolidone; and 1,3-dimethyl-2-imidazolidinone. Examples of the polyalkylene glycol include polyethylene glycol and polypropylene glycol. Examples of the alkylene glycol include ethylene glycol, propylene glycol, butylene glycol, diethylene glycol, triethylene glycol, dipropylene glycol, tripropylene glycol, thiodiglycol, and hexylene glycol. The above wetting agents may be used alone or in combination of two or more types thereof. Among the above wetting agent, an alkylene glycol and a polyhydric alcohol such as glycerin are preferred.

Examples of the penetrating agent include glycol ether. Examples of the glycol ether include ethylene glycol methyl ether, ethylene glycol ethyl ether, ethylene glycol-n-propyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n-propyl ether, and tripropylene glycol-n-butyl ether. The penetrating agents may be used alone or in combination of two or more types thereof.

The aqueous ink may further contain an additive known in the related art, if necessary. Examples of the additive include a surfactant, a pH adjuster, a viscosity modifier, a surface tension regulator, and an antifungal agent. Examples of the viscosity modifier include polyvinyl alcohol, cellulose, and a water-soluble resin.

In the aqueous ink, for example, a colorant, water, a water-soluble organic solvent, and optionally other additive components are uniformly mixed by using a method known in the related art. Thereafter, insoluble matters can be removed with a filter or the like, to prepare the aqueous ink.

An amount of the colorant contained in the ink is preferably 40 wt% or less. The ink preferably has a viscosity in a range of 1 mPa·s or more and 8 mPa·s or less. The ink preferably has a surface tension in a range of 20 mN/m or more and 45 mN/m or less.

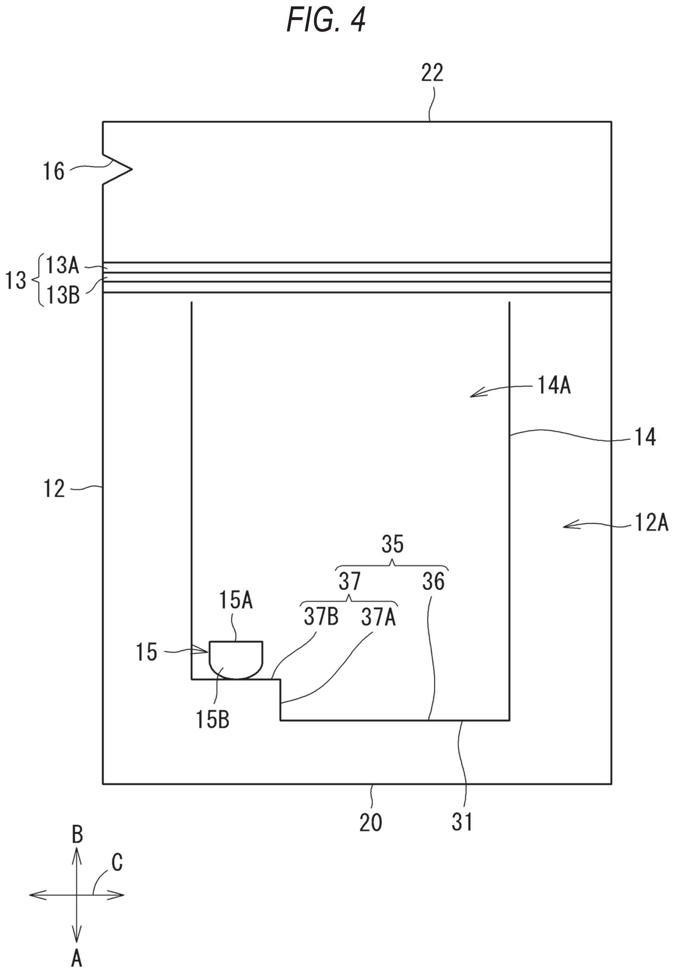

The storage bag 1 is configured to store the ink cartridge 2. As shown in FIG. 4, the storage bag 1 includes an outer bag 12, a zipper 13, an inner bag 14, and an ink leakage prevention member 15.

The outer bag 12 is formed by welding outer peripheral edges of two films over the entire circumference. The outer bag 12 has a rectangular shape in which a length in a length direction A, B is longer than a length in a width direction C. The length direction A, B is a direction connecting a bottom 20 of the outer bag 12 and one end 22 opposite to the bottom 20 of the outer bag 12. In other words, the length direction A, B is a direction connecting an opening 21 and a bottom 35 of an internal space 14A of the inner bag 14, which are to be described later. Hereinafter, a direction from the one end 22 of the outer bag 12 toward the bottom 20 of the outer bag 12 is referred to as a bottom direction A. A direction from the bottom 20 of the outer bag 12 toward the one end 22 of the outer bag 12 is referred to as a top direction B. The width direction C is a direction perpendicular to the length direction A, B.

A material of the outer bag 12 is a PP resin. The outer bag 12 has flexibility. The entire outer bag 12 transmits light. A user can visually recognize an internal space 12A of the outer bag 12 from the outside.

As shown in FIG. 1, an address 17 of a recycler is described on an outer surface of the outer bag 12. Accordingly, the user can easily mail the ink cartridge 2 stored in the storage bag 1 to the recycler. The recycler is a recycler that reuses the ink cartridge 2. On the outer surface of the outer bag 12, a graphic 18 showing a posture in which the ink cartridge 2 is stored in the inner bag 14 is described.

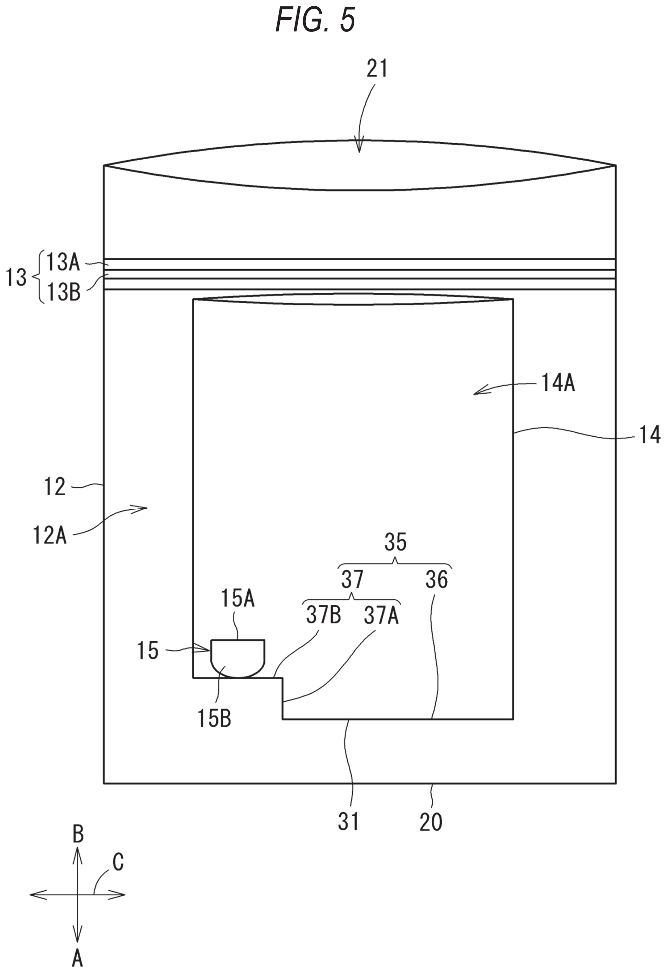

A notch 16 is located near the one end 22 of the outer bag 12. The notch 16 is located at one end of the outer bag 12 in the width direction C. The notch 16 is a cut extending from one end to the other end of the outer bag 12 in the width direction C. Accordingly, the user can easily tear the outer bag 12 in the width direction C at the notch 16. As shown in FIG. 5, by tearing the outer bag 12 in the width direction C, the opening 21 through which the ink cartridge 2 can be inserted into the internal space 12A of the outer bag 12 is open. In the following description, it is assumed that the opening 21 is an open state.

The zipper 13 is located in the internal space 12A of the outer bag 12. The zipper 13 is located in the bottom direction A with respect to the notch 16. The zipper 13 extends in the width direction C from the one end to the other end of the outer bag 12 in the width direction C. Specifically, the zipper 13 includes a fitting recess portion 13A and a fitting protrusion portion 13B.

The fitting recess portion 13A is fixed to an inner surface of one film. The fitting protrusion portion 13B is fixed to an inner surface of the other film. The fitting protrusion portion 13B is configured to be fitted into the fitting recess portion 13A. The fitting protrusion portion 13B is configured to be detached from the fitting recess portion 13A. The zipper 13 is configured to seal the opening 21 of the outer bag 12 by fitting the fitting protrusion portion 13B into the fitting recess portion 13A. Accordingly, the zipper 13 can seal the opening 21. The zipper 13 is an example of a sealing member.

The inner bag 14 is located in the internal space 12A of the outer bag 12. The inner bag 14 is close to the zipper 13 in the bottom direction A. In other words, the zipper 13 is close to an end of the inner bag 14 in the top direction B. The inner bag 14 is located at a center of the outer bag 12 in the width direction C. The inner bag 14 is located at a center of the outer bag 12 in the length direction A, B. The inner bag 14 is fixed to an inner surface of the outer bag 12.

The inner bag 14 is open in the top direction B by welding the outer peripheral edges of the two films to each other. Accordingly, the user can insert the ink cartridge 2 into the internal space 14A of the inner bag 14 through the opening 21.

A material of the inner bag 14 is a polypropylene. The inner bag 14 has flexibility. The entire inner bag 14 transmits light. The user can visually recognize the internal space 14A of the inner bag 14 from the outside of the outer bag 12. The inner bag 14 is an example of a bag. The entire inner bag 14 is an example of a light transmission portion.

A bottom 31 of the inner bag 14 extends in the width direction C in a stepped manner such that one portion closer to a center in the width direction C is located closer to the top direction B than the other portion. Accordingly, the bottom 35 of the internal space 14A of the inner bag 14 includes a bottom portion 36 and a step portion 37.

The bottom portion 36 is located from the other end in the width direction C to one portion more than a center of the bottom 31 of the inner bag 14 in the width direction C. The step portion 37 is adjacent to one end of the bottom portion 36 in the width direction C. The step portion 37 is located from the one end of the bottom portion 36 in the width direction C to one end of the bottom 35 in the width direction C. The step portion 37 protrudes from the bottom portion 36 toward the top direction B.

Specifically, the step portion 37 has a step surface 37A and a protruding end surface 37B. The step surface 37A extends from the one end of the bottom portion 36 in the width direction C toward the top direction B. The protruding end surface 37B extends from an end of the step surface 37A in the top direction B toward the one end of the bottom 35 in the width direction C.

The ink leakage prevention member 15 is located at the bottom 35 of the internal space 14A of the inner bag 14. The ink leakage prevention member 15 is located closer to one portion of the internal space 14A of the inner bag 14 than is a center of the bottom 35 in the width direction C. The ink leakage prevention member 15 is located on the protruding end surface 37B of the step portion 37.

The ink leakage prevention member 15 is made of a rubber. The ink leakage prevention member 15 has a columnar shape extending in the length direction A, B. An end surface of the ink leakage prevention member 15 in the bottom direction A has a hemispherical shape bulging toward the bottom direction A. The end surface in the bottom direction A may be a flat surface. The ink leakage prevention member 15 may have a cubic shape or a rectangular parallelepiped shape. An outer surface of the ink leakage prevention member 15 has a closing surface 15A and a fixing surface 15B.

The closing surface 15A is an end surface of the ink leakage prevention member 15 in the top direction B. The closing surface 15A is a circular flat surface facing the top direction B. The closing surface 15A is larger than the ink outflow port 7. Specifically, an area of the closing surface 15A is larger than an area of a virtual surface in which the ink outflow portion 4 defines the ink outflow port 7. The fixing surface 15B is a portion closer to the bottom direction A than the closing surface 15A. The fixing surface 15B is welded to an inner surface of the inner bag 14.

Specifically, the fixing surface 15B is welded to the protruding end surface 37B, the inner surface of one film, and the inner surface of the other film. The ink leakage prevention member 15 may be slightly away from the protruding end surface 37B in the top direction B. In this case, the fixing surface 15B may not be welded to the protruding end surface 37B.

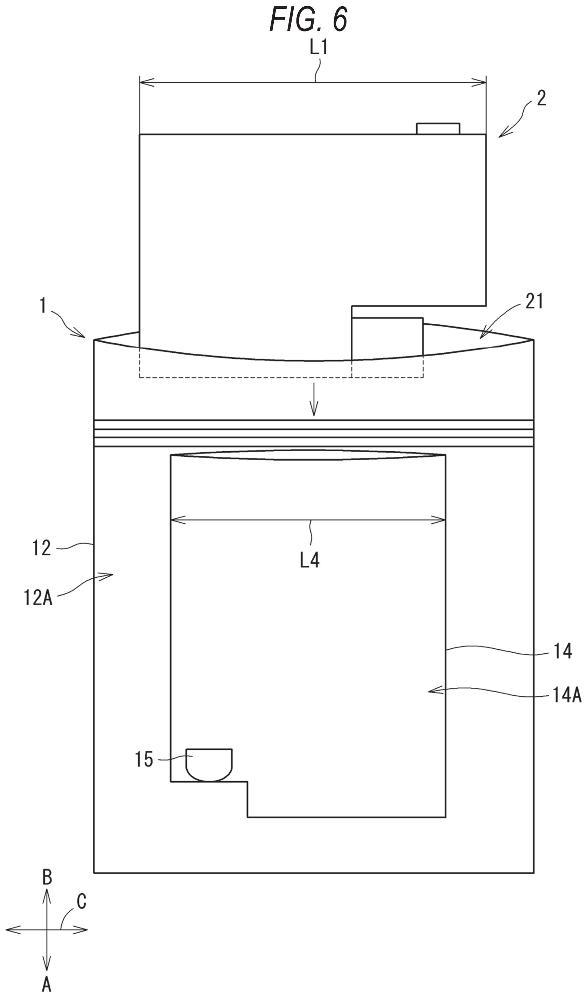

As shown in FIGs. 2 and 6, a length L4 of the internal space 14A of the inner bag 14 in the width direction C is shorter than the length L1 of the ink cartridge 2 in the front-rear direction. Accordingly, the user cannot insert the ink cartridge 2 into the internal space 14A of the inner bag 14 through the opening 21 in the up-down direction.

As shown in FIGs. 2, 3, and 7, the length L4 of the internal space 14A of the inner bag 14 in the width direction C is longer than the length L2 of the ink cartridge 2 in the up-down direction. A length L5 between the bottom portion 36 of the inner bag 14 and the zipper 13 in the length direction A, B is slightly longer than the length L1 of the ink cartridge 2 in the front-rear direction. A length L7 between the closing surface 15A and the bottom portion 36 in the length direction A, B is equal to a length L8 between the front end 2B of the ink cartridge 2 and the ink outflow port 7 in the front-rear direction.

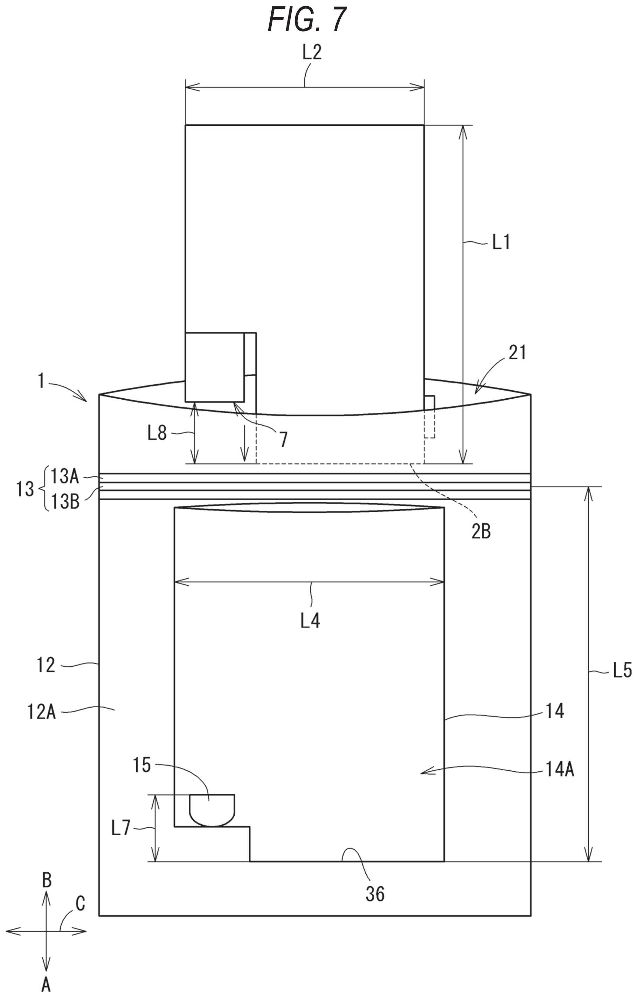

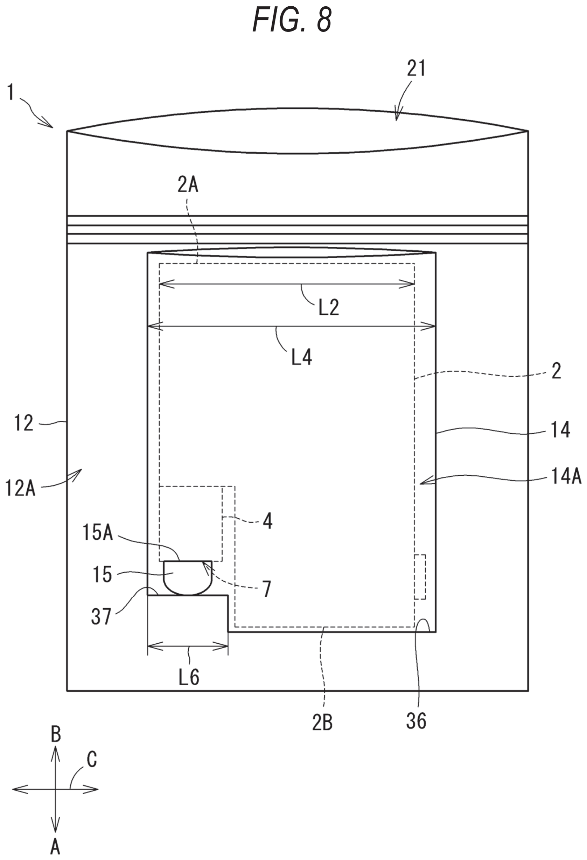

Accordingly, the user can insert the ink cartridge 2 forward into the internal space 14A of the inner bag 14 through the opening 21. Specifically, as shown in FIGs. 7 and 8, the user inserts the ink cartridge 2 forward into the internal space 14A of the inner bag 14 through the opening 21. In this state, the front end 2B of the ink cartridge 2 is brought into contact with the bottom portion 36 of the inner bag 14. The front end 2B of the ink cartridge 2 may be slightly away from the bottom portion 36 in the top direction B. At the same time, a front end of the ink outflow portion 4 is brought into contact with the closing surface 15A. Accordingly, the closing surface 15A closes the entire ink outflow port 7. The front end is an example of a first end.

As shown in FIG. 8, the length L4 of the internal space 14A of the inner bag 14 in the width direction C is shorter than a total length of the length L2 and a length L6. The length L2 is the length of the ink cartridge 2 in the up-down direction. The length L6 is a length of the step portion 37 in the width direction C. Accordingly, in a state where the ink cartridge 2 is inserted into the internal space 14A of the inner bag 14 through the opening 21 in the front-rear direction, the ink cartridge 2 is less likely to move in the width direction C. In this state, the inner surface of the inner bag 14 conforms to an appearance shape of the ink cartridge 2.

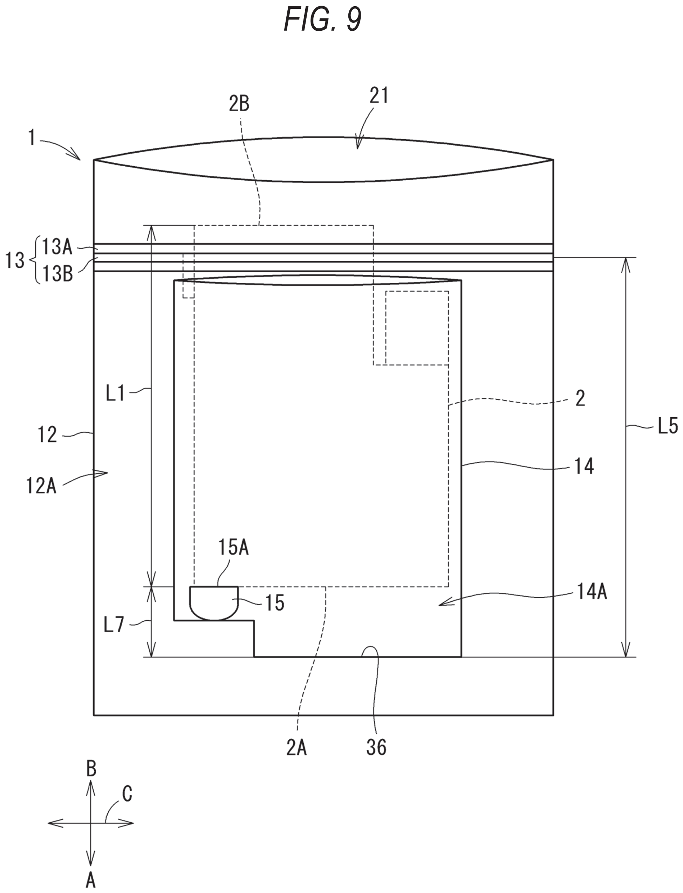

As shown in FIG. 9, the length L5 between the bottom portion 36 of the inner bag 14 and the zipper 13 in the length direction A, B is shorter than a total length of the length L1 and the length L7. The length L1 is the length of the ink cartridge 2 in the front-rear direction. The length L7 is a length between the closing surface 15A and the bottom portion 36 in the length direction A, B. Accordingly, when the ink cartridge 2 is erroneously inserted rearward into the internal space 14A of the inner bag 14 through the opening 21, the trailing end 2A of the ink cartridge 2 is brought into contact with the closing surface 15A. As a result, since the ink cartridge 2 protrudes from the zipper 13 in the top direction B, the user cannot seal the opening 21 with the zipper 13. The trailing end 2A is an example of a second end.

Next, a method of using the storage bag 1 will be described. As shown in FIG. 1, the storage bag 1 in an initial state is not open. That is, the storage bag 1 contains a new ink cartridge 2. The closing surface 15A of the ink leakage prevention member 15 closes the entire ink outflow port 7 of the new ink cartridge 2.

First, the user tears the outer bag 12 in the width direction C at the notch 16. As a result, the opening 21 of the storage bag 1 is open. Next, the user takes out a new ink cartridge 2 from the inner bag 14 through the opening 21. Next, the user views, on the outer surface of the outer bag 12, the graphic 18 showing the posture in which the ink cartridge 2 is stored in the inner bag 14. Accordingly, the user grasps a posture of inserting the ink cartridge 2 into the internal space 14A of the inner bag 14.

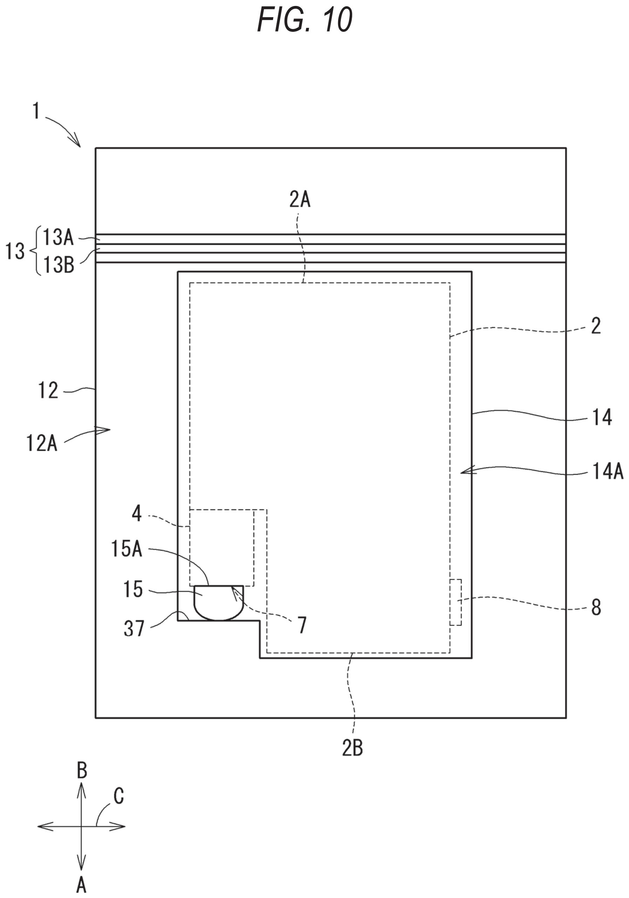

Next, as shown in FIG. 7, the user inserts the used ink cartridge 2 forward into the internal space 14A of the inner bag 14 through the opening 21. As a result, as shown in FIG. 8, the front end of the ink outflow portion 4 is in contact with the closing surface 15A. Accordingly, the entire ink outflow port 7 is closed by the closing surface 15A. Next, as shown in FIG. 10, the user seals the opening 21 by fitting the fitting protrusion portion 13B into the fitting recess portion 13A of the zipper 13.

Finally, the user puts a postage stamp on the outer surface of the outer bag 12 and posts the used ink cartridge 2 stored in the storage bag 1. The recycler takes out the delivered used ink cartridge 2 from the storage bag 1 and reuses the used ink cartridge 2.

On the other hand, FIG. 9 shows a state where the ink cartridge 2 is erroneously inserted rearward into the internal space 14A of the inner bag 14 through the opening 21. In this case, the trailing end 2A of the ink cartridge 2 is in contact with the closing surface 15A. Therefore, the ink cartridge 2 protrudes from the zipper 13 in the top direction B. As a result, the user cannot seal the opening 21 with the zipper 13. Accordingly, the user recognizes that the posture of inserting the ink cartridge 2 into the internal space 14A of the inner bag 14 is incorrect. Thereafter, the user takes out the ink cartridge 2 from the internal space 14A of the inner bag 14, and reinserts the ink cartridge 2 into the internal space 14A of the inner bag 14 in a correct posture.

### [Effects of Present Embodiment]

In the above embodiment, the user simply inserts the ink cartridge 2 forward into the internal space 14A of the inner bag 14, leading to a state where the closing surface 15A closes the ink outflow port 7. Therefore, for example, another member is less likely to erroneously press the valve 5 due to vibration during transportation of a new ink cartridge 2 or a used ink cartridge 2. As a result, the ink is less likely to leak through the ink outflow port 7. Even when the ink leaks through the ink outflow port 7, the ink leaked through the ink outflow port 7 is less likely to leak to the outside of the storage bag 1 since the ink cartridge 2 is stored in the storage bag 1. The appearance shape of the ink cartridge 2 inserted forward into the internal space 14A of the inner bag 14 conforms to the inner surface of the inner bag 14. Therefore, the ink cartridge 2 is less likely to move in the internal space 14A of the inner bag 14. Therefore, for example, damage due to the ink cartridge 2 coming into contact with the inner surface of the inner bag 14 due to the vibration during the transportation is prevented. The user can seal the storage bag 1 with the zipper 13. Therefore, the ink cartridge 2 can be prevented from coming out of the internal space 14A of the inner bag 14 through the opening 21.

In the above embodiment, since the closing surface 15A is larger than the ink outflow port 7, the ink leakage prevention member 15 is less likely to enter the ink outflow port 7. Therefore, for example, the ink leakage prevention member 15 is less likely to erroneously press the valve 5 due to the vibration during the transportation of the ink cartridge 2. Therefore, the leakage of the ink through the ink outflow port 7 is prevented.

In the above embodiment, since the storage bag 1 includes the zipper 13 extending in the width direction C, the user can easily seal the opening 21 with the zipper 13.

In the above embodiment, the length L4 of the internal space 14A of the inner bag 14 in the width direction C is shorter than the length L1 of the ink cartridge 2 in the front-rear direction. Therefore, the user cannot insert the ink cartridge 2 into the internal space 14A of the inner bag 14 in the up-down direction. Therefore, the user can easily insert the ink cartridge 2 into the internal space 14A of the inner bag 14 in a correct posture.

In the above embodiment, the bottom 35 of the internal space 14A of the inner bag 14 includes the step portion 37 protruding from the bottom portion 36 toward the top direction B. The ink leakage prevention member 15 is located on the protruding end surface 37B of the step portion 37. Therefore, even when the ink outflow port 7 is largely away rearward from the front end 2B of the ink cartridge 2, the closing surface 15A of the ink leakage prevention member 15 closes the ink outflow port 7. The inner surface of the inner bag 14 is likely to have a shape conforming to the appearance shape of the ink cartridge 2 inserted forward into the internal space 14A of the inner bag 14. Therefore, for example, the damage due to the ink cartridge 2 coming into contact with the inner surface of the inner bag 14 due to the vibration during the transportation is further prevented.

In the above embodiment, the length L4 of the internal space 14A of the inner bag 14 in the width direction C is shorter than the total length of the length L2 and the length L6. The length L2 is the length of the ink cartridge 2 in the up-down direction. The length L6 is the length of the step portion 37 in the width direction C. Therefore, the ink cartridge 2 is less likely to move in the inner bag 14 to the width direction C in a state of being inserted forward into the internal space 14A of the inner bag 14. Therefore, the damage to the ink cartridge 2 is further prevented.

In the above embodiment, the length L5 between the bottom portion 36 of the inner bag 14 and the zipper 13 in the length direction A, B is shorter than the total length of the length L1 and the length L7. The length L1 is the length of the ink cartridge 2 in the front-rear direction. The length L7 is the length between the closing surface 15A and the bottom portion 36 in the length direction A, B. Therefore, when the user erroneously inserts the ink cartridge 2 rearward into the internal space 14A of the inner bag 14, the trailing end 2A of the ink cartridge 2 is brought into contact with the closing surface 15A. As a result, the ink cartridge 2 protrudes from the zipper 13. Therefore, since the opening 21 cannot be sealed by the zipper 13, the user recognizes that the posture of inserting the ink cartridge 2 into the internal space 14A of the inner bag 14 is incorrect. Therefore, the user can easily insert the ink cartridge 2 into the internal space 14A of the inner bag 14 in a correct posture.

In the above embodiment, since the material of the inner bag 14 and the material of the outer bag 12 are each a PP resin, the inner bag 14 and the outer bag 12 have better gas barrier property, waterproof property, and moisture-proof property than those of paper bags.

In the above embodiment, the entire inner bag 14 and the entire outer bag 12 transmit light. Therefore, the user can easily check a color of the ink remaining in the ink cartridge 2 and the storage element 8 storing the cartridge information from the outside of the outer bag 12. Therefore, reuse is easy.

In the above embodiment, since the address 17 of the recycler is described on the outer surface of the outer bag 12, the user can easily mail the used ink cartridge 2 to the recycler. Therefore, there is no need to sort the used ink cartridges 2 for each recycler, as compared with the case where the used ink cartridges 2 are collected in a collection box. Therefore, the ink cartridge 2 can be easily reused.

In the above embodiment, the outer surface of the outer bag 12 illustrates the posture in which the ink cartridge 2 is stored in the inner bag 14. Therefore, the user can easily insert the ink cartridge 2 into the internal space 14A of the inner bag 14 in a correct posture.

In the above embodiment, the ink stored in the ink cartridge 2 contains a colorant composed of one or more of a pigment and a dye. Therefore, contamination of the ink cartridge 2 by the colorant is effectively prevented.

In the above embodiment, the pigment in the ink is a resin dispersion type pigment or a self-dispersion type pigment. Therefore, the ink cartridge 2 is effectively prevented from being contaminated by the resin dispersion type pigment or the self-dispersion type pigment.

In the above embodiment, the amount of the colorant in the ink is 40 wt% or less. Therefore, even when the ink leaks from the ink cartridge 2, the surface of the ink cartridge 2 is less likely to be contaminated by the ink.

In the above embodiment, the viscosity of the ink is in the range of 1 mPa·s or more and 8 mPa·s or less. Therefore, the ink is less likely to leak through the ink outflow port 7.

In the above embodiment, the surface tension of the ink is in the range of 20 mN/m or more and 45 mN/m or less. The ink is less likely to leak through the ink outflow port 7.

In the above embodiment, the dye in the ink is a direct dye, an acid dye, a basic dye, or a reactive dye. Therefore, even when the dye ink adheres to the surface of the ink cartridge 2, the user can easily wipe the dye ink from the surface of the ink cartridge 2. Therefore, the surface of the ink cartridge 2 is less likely to be contaminated by the dye ink.

### [Modifications]

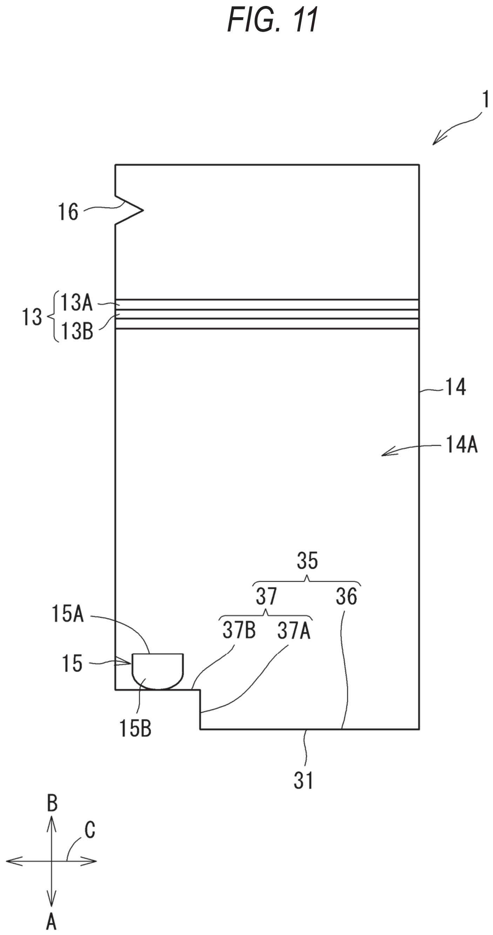

In the above embodiment, the storage bag 1 includes the outer bag 12 and the inner bag 14, but the outer bag 12 may be omitted as shown in FIG. 11. In this case, the notch 16 and the zipper 13 are located in the inner bag 14.

In the above embodiment, the closing surface 15A of the ink leakage prevention member 15 closes the entire ink outflow port 7, but may close a part of the ink outflow port 7. In this case, the closing surface 15A may be smaller than the ink outflow port 7.

In the above embodiment, the ink leakage prevention member 15 is made of a rubber, but is not limited to a rubber. For example, the ink leakage prevention member 15 may be made of a material that absorbs an ink. The material that absorbs an ink is, for example, a sponge or a water-absorbing polymer. In this way, even when the ink leaks through the ink outflow port 7, the leaked ink is absorbed by the ink leakage prevention member 15. Therefore, the surface of the ink cartridge 2 is less likely to be contaminated by the ink.

In the above embodiment, the ink leakage prevention member 15 may be made of a material weldable to an opening end of the ink outflow portion 4 defining the ink outflow port 7. The material weldable to the ink outflow port 7 is, for example, a hot melt adhesive. In this case, for example, the user welds the opening end of the ink outflow portion 4 to the closing surface 15A by heat from a dryer. In this way, the closing surface 15A is maintained in a state of closing the ink outflow port 7. Therefore, for example, the closing surface 15A is less likely to be displaced with respect to the ink outflow port 7 due to the vibration during the transportation of the ink cartridge 2.

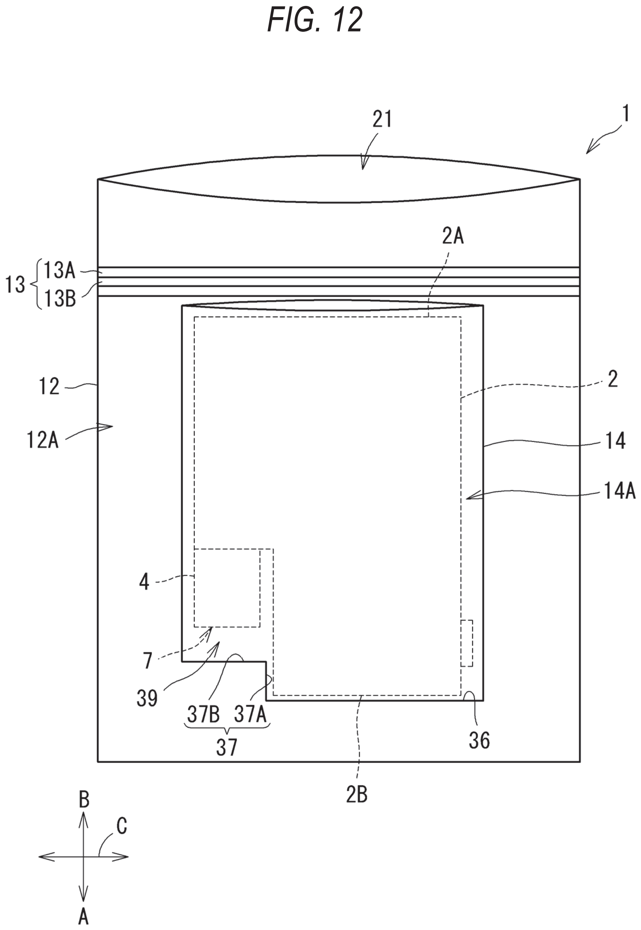

In the above embodiment, the storage bag 1 includes the ink leakage prevention member 15, but the ink leakage prevention member 15 may be omitted as shown in FIG. 12. In this case, in a state where the ink cartridge 2 is inserted forward into the internal space 14A of the inner bag 14, a space 39 is present between the ink outflow port 7 and the protruding end surface 37B. In this way, there is no other member near the ink outflow port 7. Therefore, for example, another member is less likely to press the valve 5 due to the vibration during the transportation of the ink cartridge 2. As a result, the ink is less likely to leak through the ink outflow port 7.

In the above embodiment, the opening 21 is sealed by the zipper 13, but is not limited to being sealed the zipper 13 as long as the opening 21 can be sealed. For example, the opening 21 may be sealed with a glue instead of the zipper 13.

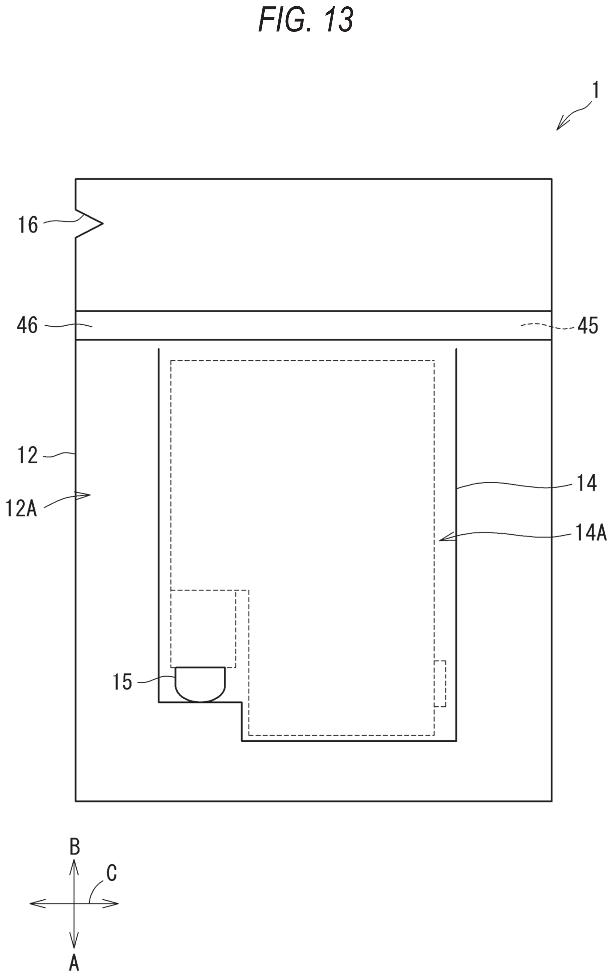

Specifically, as shown in FIG. 13, the storage bag 1 according to a modification includes a glue 45 and a release tape 46. The glue 45 is applied to the inner surface of the outer bag 12. The release tape 46 is releasably attached to the inner surface of the outer bag 12 via the glue 45. In this way, the user peels off the release tape 46 from the inner surface of the outer bag 12 and adheres the inner surfaces of the outer bag 12 to each other. Therefore, the user can more easily seal the opening 21 than in the case where the opening 21 is sealed with a tape prepared separately. The glue 45 and the release tape 46 are examples of a sealing member.

In the above embodiment, the length L4 of the internal space 14A of the inner bag 14 in the width direction C is shorter than the length L1 of the ink cartridge 2 in the front-rear direction. However, the length L4 of the internal space 14A of the inner bag 14 in the width direction C may be slightly longer than the length L1 of the ink cartridge 2 in the front-rear direction.

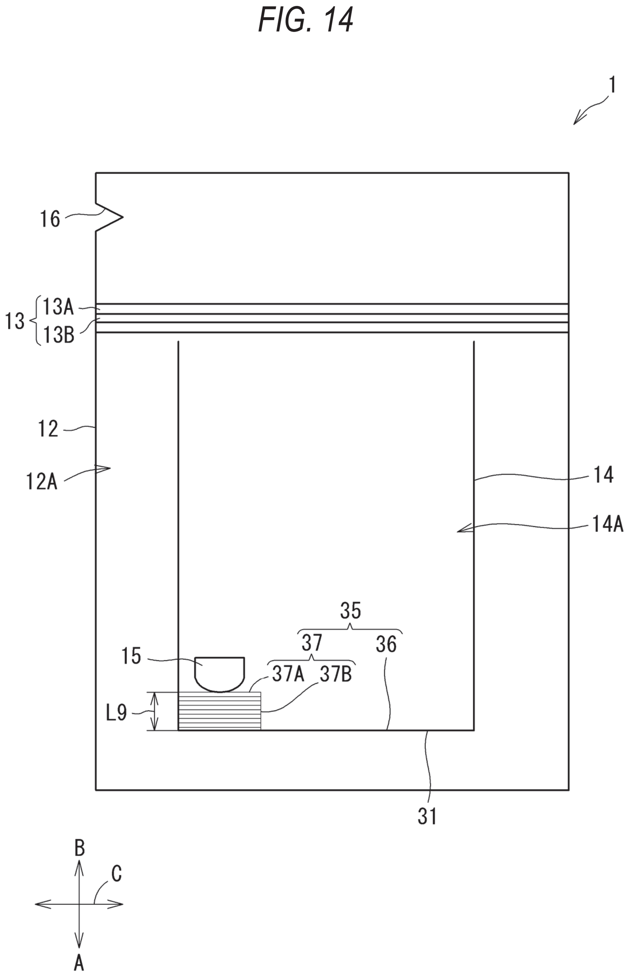

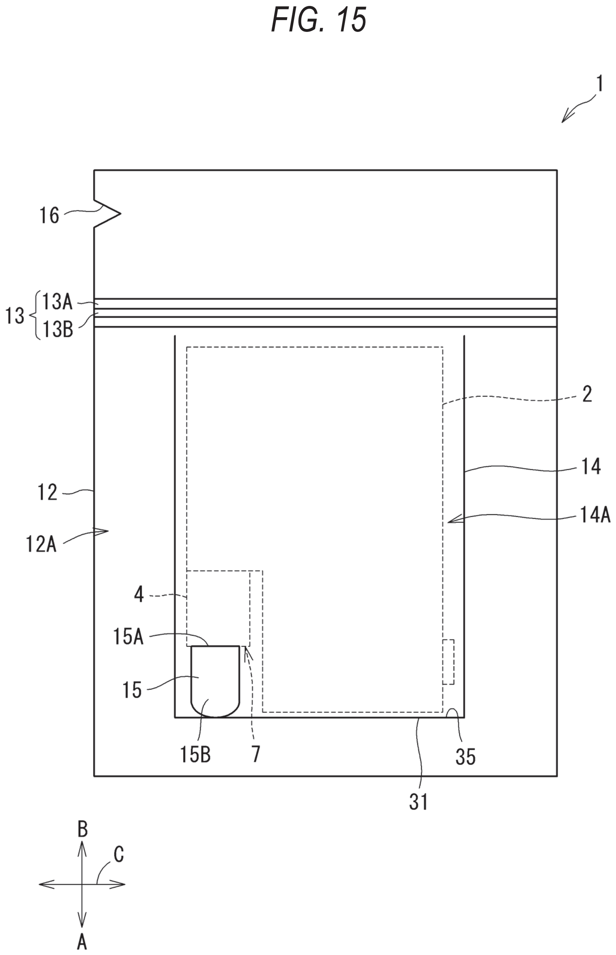

In the above embodiment, the bottom 31 of the inner bag 14 extends in the width direction C in a stepped manner such that one portion closer to the center in the width direction C is located closer to the top direction B than the other portion. However, as shown in FIG. 14, the bottom 31 of the inner bag 14 may extend linearly in the width direction C from one end to the other end in the width direction C. In this case, the step portion 37 may be formed by increasing a length L9 of a portion where the bottom 31 of the inner bag 14 is welded in the length direction A, B. As shown in FIG. 15, the step portion 37 may be omitted. In this case, the ink leakage prevention member 15 may be elongated in the length direction A, B.

In the above embodiment, the length L4 of the internal space 14A of the inner bag 14 in the width direction C is shorter than the total length of the length L2 and the length L6. The length L2 is the length of the ink cartridge 2 in the up-down direction. The length L6 is the length of the step portion 37 in the width direction C. However, the length L4 of the internal space 14A of the inner bag 14 in the width direction C may be longer than the total length of the length L2 and the length L6.

In the above embodiment, the length L5 between the bottom portion 36 of the inner bag 14 and the zipper 13 in the length direction A, B is shorter than the total length of the length L1 and the length L7. The length L1 is the length of the ink cartridge 2 in the front-rear direction. The length L7 is the length between the closing surface 15A and the bottom portion 36 in the length direction A, B. However, the length L5 between the bottom portion 36 of the inner bag 14 and the zipper 13 in the length direction A, B may be longer than the total length of the length L1 and the length L7.

In the above embodiment, the outer bag 12 and the inner bag 14 are each formed by welding the outer peripheral edges of two films, but the method of forming the outer bag 12 and the inner bag 14 is not limited. For example, the outer bag 12 and the inner bag 14 may each be formed by welding bottoms of cylindrically formed films. The outer bag 12 and the inner bag 14 may each be configured to have a gusset. In this way, the internal space 12A of the outer bag 12 and the internal space 14A of the inner bag 14 are each widened in a thickness direction perpendicular to the length direction A, B and the width direction C. Therefore, the user easily inserts the ink cartridge 2 forward into the internal space 14A of the inner bag 14 through the opening 21.

In the above embodiment, the material of the inner bag 14 and the material of the outer bag 12 are each a PP resin, but are not limited to a PP resin. For example, the material of the inner bag 14 and the material of the outer bag 12 may be a PET resin, aluminum, or PE laminated paper in which a film made of a PE resin is laminated on paper. In addition, the material of the inner bag 14 and the material of the outer bag 12 may be paper in which an aluminum-deposited film obtained by depositing aluminum is laminated on a PP film made of a PP resin.

In the above embodiment, the material of the inner bag 14 and the material of the outer bag 12 are each a PP resin. However, the inner bag 14 and the outer bag 12 may each have a laminated structure in which a plurality of thermoplastic resin films are laminated. For example, the inner bag 14 and the outer bag 12 may each have a laminated structure in which a PP film made of a PP resin and a PET film made of a PET resin are laminated. In this way, the inner bag 14 and the outer bag 12 each have good gas barrier property, waterproof property, and moisture-proof property.

In the above embodiment, the entire inner bag 14 and the entire outer bag 12 transmit light, but a light transmission portion that transmits light may be located in a part of the inner bag 14 and a part of the outer bag 12. The inner bag 14 and the outer bag 12 may not transmit light.

In the above embodiment, the address 17 of the recycler is described on the outer surface of the outer bag 12, but the address 17 may be omitted.

In the above embodiment, the outer surface of the outer bag 12 illustrates the posture in which the ink cartridge 2 is stored in the inner bag 14. However, the posture in which the ink cartridge 2 is stored in the inner bag 14 may not be illustrated on the outer surface of the outer bag 12.

As described above, the present specification discloses the following matters:
(1) A storage bag including:
   a bag configured to store an ink cartridge configured to be attached to and detached from an inkjet printer;
   a sealing member configured to seal an opening that is open; and
   an ink leakage prevention member located at a bottom of an internal space of the bag,
   in which the ink cartridge includes:
      an ink outflow port opening in a mounting direction in which the ink cartridge is mounted to the inkjet printer; and
      a valve configured to open and close the ink outflow port,
   the ink outflow port is located at a lower end portion of the ink cartridge in an up-down direction in a state where the ink cartridge is in a mounting posture in which the ink cartridge mounted to the inkjet printer, the ink outflow port being located away from a first end of the ink cartridge in the mounting direction to a removal direction opposite to the mounting direction,
   an inner surface of the bag has a shape conforming to an appearance shape of the ink cartridge inserted into the internal space of the bag in the mounting direction, and
   the ink leakage prevention member has a closing surface that closes the ink outflow port in a state where the ink cartridge is inserted into the internal space of the bag in the mounting direction.

When a user simply inserts the ink cartridge into the internal space of the bag in the mounting direction, the closing surface of the ink leakage prevention member closes the ink outflow port. Therefore, for example, erroneous pressing on the valve by another member due to vibration during transportation of the ink cartridge is prevented. As a result, leakage of the ink through the ink outflow port is prevented. Even when the ink leaks through the ink outflow port, the ink is prevented from leaking to the outside of the bag. In addition, since the user can seal the bag with the sealing member, the ink cartridge can be prevented from coming out of the internal space of the bag. Since the appearance shape of the ink cartridge inserted into the internal space of the bag in the mounting direction conforms to the inner surface of the bag, the ink cartridge is less likely to move in the internal space of the bag. Therefore, for example, damage due to the ink cartridge coming into contact with the inner surface of the bag due to the vibration during the transportation is prevented.

(2) The storage bag according to (1), in which the closing surface is larger than the ink outflow port.

The ink leakage prevention member is prevented from entering the ink outflow port. Therefore, for example, the ink leakage prevention member is less likely to erroneously press the valve due to the vibration during the transportation of the ink cartridge. Therefore, the leakage of the ink through the ink outflow port is prevented.

(3) The storage bag according to (1), in which the ink leakage prevention member is made of a material configured to absorb an ink.

Even when the ink leaks through the ink outflow port, a surface of the ink cartridge is less likely to be contaminated by the ink since the ink is absorbed by the ink leakage prevention member. The material that absorbs an ink is, for example, a sponge or a water-absorbing polymer.

(4) The storage bag according to (1), in which the ink leakage prevention member is made of a material configured to be welded to the ink outflow port.

For example, the user welds the closing surface to the ink outflow port by heat from a dryer. Accordingly, since the closing surface is maintained in a state of closing the ink outflow port, for example, the closing surface is less likely to be displaced with respect to the ink outflow port due to the vibration during the transportation of the ink cartridge. The material weldable to the ink outflow port is, for example, a hot melt adhesive.

(5) The storage bag according to any one of (1) to (4), in which the sealing member is a zipper extending in a width direction, the width direction being perpendicular to a length direction connecting the opening and the bottom of the internal space of the bag.

The user can easily seal the opening with the zipper.

(6) The storage bag according to any one of (1) to (4),
in which the sealing member includes:
a glue applied to the inner surface of the bag; and
a release tape releasably attached to the inner surface of the bag via the glue.

The user peels off the release tape from the inner surface of the bag and adheres the inner surfaces of the bag to each other. Therefore, the user can more easily seal the opening than in the case where the opening is sealed with a tape prepared separately.

(7) The storage bag according to (5), in which a length of the internal space of the bag in the width direction is shorter than a length of the ink cartridge in the mounting direction from a second end in the removal direction to the first end in the mounting direction.

Since the user cannot insert the ink cartridge into the internal space of the bag in the up-down direction, the user can easily insert the ink cartridge into the internal space of the bag in a correct posture.

(8) The storage bag according to (7),
in which the bottom of the internal space of the bag includes:
   a bottom portion in contact with the first end of the ink cartridge in the mounting direction, the ink cartridge being inserted into the internal space of the bag in the mounting direction through the opening; and
   a step portion protruding in the length direction from the bottom portion, and
the ink leakage prevention member is located at a protruding end surface of the step portion.

The closing surface closes the ink outflow port even when the ink outflow port is largely away from the first end of the ink cartridge in the mounting direction toward the removal direction. The inner surface of the bag is likely to have a shape conforming to the appearance shape of the ink cartridge inserted into the internal space of the bag in the mounting direction.

(9) The storage bag according to (8), in which the length of the internal space of the bag in the width direction is shorter than a total length of a length in the up-down direction connecting an upper end and a lower end of the ink cartridge and a length of the step portion in the width direction.

The ink cartridge is less likely to move in the width direction of the bag in a state of being inserted into the internal space of the bag in the mounting direction. Therefore, the damage to the ink cartridge is further prevented.

(10) The storage bag according to (9), in which a length between the zipper and the bottom portion of the bag in the length direction is shorter than a total length of a length between the first end and the second end of the ink cartridge in the mounting direction and a length between the closing surface and the bottom portion in the length direction.

When the user erroneously inserts the ink cartridge into the internal space of the bag in the removal direction, the second end of the ink cartridge in the removal direction comes into contact with the closing surface of the ink leakage prevention member. Therefore, the ink cartridge protrudes from the zipper. Therefore, since the opening cannot be sealed by the zipper, the user recognizes that the posture of inserting the ink cartridge into the internal space of the bag is incorrect. Therefore, the user can easily insert the ink cartridge into the internal space of the bag in a correct posture.

(11) The storage bag according to (1),
in which a material of the bag is any one of a PET resin, a PP resin, aluminum, PE laminated paper in which a film made of a PE resin is laminated on paper, or paper in which an aluminum-deposited film obtained by depositing aluminum is laminated on a PP film made of a PP resin.

Compared to a paper bag, a gas barrier property, a waterproof property, and a moisture-proof property are better.

(12) The storage bag according to (1),
in which the bag has a laminated structure in which a plurality of thermoplastic resin films are laminated.

The bag has a good gas barrier property, waterproof property, and moisture-proof property.

(13) The storage bag according to (1),
in which the bag includes a light transmission portion configured to transmit light.

The user can easily check, from the outside of the bag, a color of the ink remaining in the ink cartridge, a storage element storing cartridge information, and a barcode obtained by encoding the cartridge information. Therefore, reuse is easy.

(14) The storage bag according to (1)
in which an address of a recycler who reuses the ink cartridge is described on the bag.

The user can easily mail the used ink cartridge to a recycler who reuses the used ink cartridge. Therefore, the user does not need to sort the used ink cartridges for each recycler, as compared with the case where the used ink cartridges are collected in a collection box. Therefore, the ink cartridge can be easily reused.

(15) The storage bag according to (1)
in which a posture in which the ink cartridge is stored in the bag is illustrated on the bag.

The user can easily insert the ink cartridge into the internal space of the bag in a correct posture.

(16) The storage bag according to (1), in which an ink stored in the ink cartridge contains a colorant composed of one or more of a pigment and a dye.

Contamination of the ink cartridge by the colorant is effectively prevented.

(17) The storage bag according to (16), in which the pigment is a resin dispersion type pigment or a self-dispersion type pigment,

The ink cartridge is effectively prevented from being contaminated by the resin dispersion type pigment or the self-dispersion type pigment.

(18) The storage bag according to (16), in which an amount of the colorant is 40 wt% or less.

Even when the ink leaks from the ink cartridge, the surface of the ink cartridge is prevented from being contaminated by the ink.

(19) The storage bag according to (16), in which the ink has a viscosity in a range of 1 mPa·s or more and 8 mPa·s or less.

The leakage of the ink through the ink outflow port is prevented.

(20) The storage bag according to (16), in which the ink has a surface tension in a range of 20 mN/m or more and 45 mN/m or less.

The leakage of the ink through the ink outflow port is prevented.

(21) The storage bag according to (16), in which the ink is a dye ink, and the dye is a direct dye, an acid dye, a basic dye, or a reactive dye.

Even when the dye ink adheres to the surface of the ink cartridge, the user can easily wipe the dye ink from the surface of the ink cartridge. Therefore, the contamination of the surface of the ink cartridge by the dye ink is prevented.

(21) A storage bag includes:
a bag configured to store an ink cartridge configured to be attached to and detached from an inkjet printer; and
a sealing member configured to seal the bag,
in which the ink cartridge includes:
   an ink outflow port opening in a mounting direction in which the ink cartridge is mounted to the inkjet printer; and
   a valve configured to open and close the ink outflow port,
the ink outflow port is located at a lower end of the ink cartridge in an up-down direction in a state where the ink cartridge is in a mounting posture in which the ink cartridge mounted to the inkjet printer, the ink outflow port being located away from an end of the ink cartridge in the mounting direction to a removal direction opposite to the mounting direction,
an inner surface of the bag has a shape conforming to an appearance shape of the ink cartridge inserted into an internal space of the bag in the mounting direction, and
a space is formed between the ink outflow port and a bottom of the internal space of the bag in a state where the ink cartridge is inserted into the internal space of the bag in the mounting direction.

Since a space is present between the ink outflow port of the ink cartridge inserted into the internal space of the bag in the mounting direction and the bottom of the internal space of the bag, there is no other member near the ink outflow port. Therefore, for example, pressing on the valve by another member due to the vibration during the transportation of the ink cartridge is prevented. Therefore, when the user simply inserts the ink cartridge into the internal space of the bag in the mounting direction, the leakage of the ink through the ink outflow port is prevented. Even when the ink leaks through the ink outflow port, the ink is prevented from leaking to the outside of the bag. In addition, since the user can seal the bag with the sealing member, the ink cartridge can be prevented from coming out of the internal space of the bag. Since the appearance shape of the ink cartridge inserted into the internal space of the bag in the mounting direction conforms to the inner surface of the bag, the ink cartridge is less likely to move in the internal space of the bag. Therefore, for example, damage due to the ink cartridge coming into contact with the inner surface of the bag due to the vibration during the transportation is prevented.

(22) The storage bag according to (21),
in which the bottom of the internal space of the bag includes:
   a bottom portion in contact with a first end of the ink cartridge in the mounting direction inserted into the internal space of the bag in the mounting direction; and
   a step portion protruding from the bottom portion to an opening, and
the space is formed between the ink outflow port and a protruding end surface of the step portion.

Even when the ink outflow port is largely away from the end of the ink cartridge in the mounting direction toward the removal direction, the appearance shape of the ink cartridge is a shape conforming to the inner surface of the bag by the step portion. Therefore, for example, the damage due to the ink cartridge coming into contact with the inner surface of the bag due to the vibration during the transportation is further prevented.

According to the present disclosure, the ink leakage through the ink supply port can be prevented simply by placing the ink cartridge into the bag, and the ink cartridge is less likely to be damaged.

## Claims

1. A storage bag comprising:
a bag configured to store an ink cartridge configured to be attached to and detached from an inkjet printer;
a sealing member configured to seal an opening that is open; and
an ink leakage prevention member located at a bottom of an internal space of the bag,
wherein the ink cartridge includes:
an ink outflow port opening in a mounting direction in which the ink cartridge is mounted to the inkjet printer; and
a valve configured to open and close the ink outflow port,
the ink outflow port is located at a lower end portion of the ink cartridge in an up-down direction in a state where the ink cartridge is in a mounting posture in which the ink cartridge mounted to the inkjet printer, the ink outflow port being located away from a first end of the ink cartridge in the mounting direction to a removal direction opposite to the mounting direction,
an inner surface of the bag has a shape conforming to an appearance shape of the ink cartridge inserted into the internal space of the bag in the mounting direction, and
the ink leakage prevention member has a closing surface that closes the ink outflow port in a state where the ink cartridge is inserted into the internal space of the bag in the mounting direction.

2. The storage bag according to claim 1, wherein the closing surface is larger than the ink outflow port.

3. The storage bag according to claim 1, wherein the ink leakage prevention member is made of a material configured to absorb an ink.

4. The storage bag according to claim 1, wherein the ink leakage prevention member is made of a material configured to be welded to the ink outflow port.

5. The storage bag according to any one of claims 1 to 4, wherein the sealing member is a zipper extending in a width direction, the width direction being perpendicular to a length direction connecting the opening and the bottom of the internal space of the bag.

6. The storage bag according to any one of claims 1 to 4,
wherein the sealing member includes:
a glue applied to the inner surface of the bag; and
a release tape releasably attached to the inner surface of the bag via the glue.

7. The storage bag according to claim 5, wherein a length of the internal space of the bag in the width direction is shorter than a length of the ink cartridge in the mounting direction from a second end in the removal direction to the first end in the mounting direction.

8. The storage bag according to claim 7,
wherein the bottom of the internal space of the bag includes:
a bottom portion in contact with the first end of the ink cartridge in the mounting direction, the ink cartridge being inserted into the internal space of the bag in the mounting direction through the opening; and
a step portion protruding in the length direction from the bottom portion, and
the ink leakage prevention member is located at a protruding end surface of the step portion.

9. The storage bag according to claim 8, wherein the length of the internal space of the bag in the width direction is shorter than a total length of a length in the up-down direction connecting an upper end and a lower end of the ink cartridge and a length of the step portion in the width direction.

10. The storage bag according to claim 9, wherein a length between the zipper and the bottom portion of the bag in the length direction is shorter than a total length of a length between the first end and the second end of the ink cartridge in the mounting direction and a length between the closing surface and the bottom portion in the length direction.

11. The storage bag according to claim 1,
wherein a material of the bag is any one of a PET resin, a PP resin, aluminum, PE laminated paper in which a film made of a PE resin is laminated on paper, or paper in which an aluminum-deposited film obtained by depositing aluminum is laminated on a PP film made of a PP resin,
wherein the bag has a laminated structure in which a plurality of thermoplastic resin films are laminated,
wherein the bag includes a light transmission portion configured to transmit light,
wherein an address of a recycler who reuses the ink cartridge is described on the bag, or
wherein a posture in which the ink cartridge is stored in the bag is illustrated on the bag.

12. The storage bag according to claim 1, wherein an ink stored in the ink cartridge contains a colorant composed of one or more of a pigment and a dye.

13. The storage bag according to claim 12,
wherein the pigment is a resin dispersion type pigment or a self-dispersion type pigment,
wherein an amount of the colorant is 40 wt% or less,
wherein the ink has a viscosity in a range of 1 mPa·s or more and 8 mPa·s or less,
wherein the ink has a surface tension in a range of 20 mN/m or more and 45 mN/m or less, or
wherein the ink is a dye ink, and the dye is a direct dye, an acid dye, a basic dye, or a reactive dye.

14. A storage bag comprising:
a bag configured to store an ink cartridge configured to be attached to and detached from an inkjet printer; and
a sealing member configured to seal the bag,
wherein the ink cartridge includes:
an ink outflow port opening in a mounting direction in which the ink cartridge is mounted to the inkjet printer; and
a valve configured to open and close the ink outflow port,
the ink outflow port is located at a lower end of the ink cartridge in an up-down direction in a state where the ink cartridge is in a mounting posture in which the ink cartridge mounted to the inkjet printer, the ink outflow port being located away from an end of the ink cartridge in the mounting direction to a removal direction opposite to the mounting direction,
an inner surface of the bag has a shape conforming to an appearance shape of the ink cartridge inserted into an internal space of the bag in the mounting direction, and
a space is formed between the ink outflow port and a bottom of the internal space of the bag in a state where the ink cartridge is inserted into the internal space of the bag in the mounting direction.

15. The storage bag according to claim 14,
wherein the bottom of the internal space of the bag includes:
a bottom portion in contact with a first end of the ink cartridge in the mounting direction inserted into the internal space of the bag in the mounting direction; and
a step portion protruding from the bottom portion to an opening, and
the space is formed between the ink outflow port and a protruding end surface of the step portion.
